# EUROPÄISCHE PATENTSCHRIFT

(11) **EP 4 263 300 B1**
(45) Veröffentlichungstag und Bekanntmachung des Hinweises auf die Patenterteilung: **19.08.2026**
(21) Anmeldenummer: 21840033.1
(22) Anmeldetag: 20.12.2021
(51) Int. Cl.: B60S 3/04, B60S 3/00

(54) **VORRICHTUNG UND VERFAHREN ZUR REINIGUNG VON ZWEIRÄDERN**
DEVICE AND METHOD FOR CLEANING TWO-WHEELED VEHICLES
DISPOSITIF ET PROCÉDÉ DE NETTOYAGE DE DEUX-ROUES

(30) Priorität: 20.12.2020 DE 102020134327
(43) Veröffentlichungstag der Anmeldung: 25.10.2023
(73) Patentinhaber: Kumar, Sachin, 50668 Cologne (DE)
(72) Erfinder: Kumar, Sachin, 50668 Cologne (DE)
(74) Vertreter: Angerhausen, Christoph
(86) Internationale Anmeldenummer: PCT/EP2021/086864
(87) Internationale Veröffentlichungsnummer: WO 2022/129639

(56) Entgegenhaltungen:
- WO-A1-2017/114765
- WO-A1-86/06693
- CN-U- 207 208 020
- DE-C1- 4 325 973
- DE-U1- 9 208 442
- FR-A1- 2 976 539
- US-A1- 2009 217 955

## Beschreibung

Die Erfindung betrifft eine Vorrichtung zur Reinigung von Zweirädern, insbesondere von Fahrrädern und/oder elektrischen Fahrrädern, sowie ein Verfahren zum Reinigen von Zweirädern, insbesondere von Fahrrädern und/oder elektrischen Fahrrädern, nach den Oberbegriffen der unabhängigen Ansprüche.

Eine Vorrichtung mit den Merkmalen des Oberbegriffs des Anspruchs 1 ist aus der CN 207208020 U bekannt. Weitere Vorrichtungen und Verfahren der in Rede stehenden Art sind aus dem Stand der Technik, beispielsweise aus der FR 2 976 539 A1, der DE 43 25 973 C1, WO 2017/114765 A1, der US 2009/217955 A1, der WO 86/06693 A1 und WO 2020/007539 bekannt.

Derartige Vorrichtungen zum Reinigen von Zweirädern weisen eine Nassreinigungseinrichtung zum Reinigen des Zweirades mittels einer Reinigungsflüssigkeit auf. Bei der Reinigungsflüssigkeit handelt es sich typischerweise um Wasser, das Zusatzstoffe zur Erzeugung bzw. Verstärkung der Reinigungswirkung aufweisen kann, wie beispielsweise Tenside. Ferner weisen Vorrichtungen der in Rede stehenden Art ein Spritzschutzgehäuse zum Zurückhalten der Reinigungsflüssigkeit auf. Das Zweirad ist während der Reinigung typischerweise, zumindest zum Teil, in dem Spritzschutzgehäuse aufnehmbar. Entsprechende Verfahren zum Reinigen von Zweirädern sehen vor, dass das Zweirad während des Reinigungszyklus mittels der Reinigungsflüssigkeit gereinigt wird.

Vorrichtungen der in Rede stehenden Art weisen jedoch nach wie vor einige Nachteile auf. Das Zweirad ist, wenn es nach dem Reinigungsvorgang aus der Vorrichtung kommt, noch mit Wasser und Seife bedeckt. Wenn es außerhalb der Vorrichtung trocknet, nimmt es Verschmutzungen auf. Auch muss die Kette getrocknet werden, bevor sie gehört werden kann, da es schwierig ist, will auf eine nasse Kette zu applizieren. Oftmals kommen Vorrichtungen der in Rede stehenden Art in Werkstätten für Zweiräder zum Einsatz. Dort werden die Zweiräder üblicherweise vor den Reparaturen gereinigt. In diesem Fall ist es jedenfalls vorteilhaft, wenn die Zweiräder zu Beginn der Reparatur trocken sind.

So ist insbesondere das Handling des Zweirades beim Einführen in die Vorrichtung bzw. beim Entfernen des Zweirades aus der Vorrichtung mit dem Risiko verbunden, die Kleidung zu verschmutzen, entweder mit Reinigungsflüssigkeit, die noch an dem Zweirad anhaftet, oder mit Schmutz, der vor der Reinigung an dem Zweirad anhaftet. Dies ist insbesondere dann der Fall, wenn es sich um elektrische Fahrräder handelt, die ein signifikantes Eigengewicht aufweisen. Um die Kraft, die zum Einführen des Zweirades in die Vorrichtung bzw. zum Entfernen des Zweirades aus der Vorrichtung aufgebracht werden muss, auf das Zweirad zu übertragen, ist dann typischerweise eine Positionierung des Körpers nahe dem Zweirad notwendig, da die entsprechenden Kräfte nicht "mit gestreckten Armen" aufgebracht werden können. Das Risiko der Verschmutzung von Kleidung steigt durch eine entsprechende Positionierung des Körpers nahe dem Zweirad, die zum Aufbringen der entsprechenden Kräfte regelmäßig notwendig wird, signifikant an. Auch nach der Reinigung birgt am Zweirad anhaftende Flüssigkeit ein Risiko für die Bekleidung.

Der Erfindung liegt daher die Aufgabe zugrunde, eine Vorrichtung und ein Verfahren zum Reinigen von Zweirädern aufzuzeigen, bei denen die vorstehend genannte Nachteile nicht oder zumindest in vermindertem Umfang auftreten.

Die Aufgabe wird durch ein Verfahren und eine Vorrichtung mit den Merkmalen der unabhängigen Ansprüche gelöst. Die Merkmale der abhängigen Ansprüche betreffen vorteilhafte Ausführungsformen.

Nach einer Ausführungsform der vorliegenden Erfindung weist die Vorrichtung eine innerhalb des Spritzschutzgehäuses angeordnete Trocknungseinrichtung zum Trocknen des Zweirades auf. Es hat sich im Zusammenhang mit der vorliegenden Erfindung gezeigt, dass es möglich ist, mittels innerhalb des Spritzschutzgehäuses angeordneter Trocknungseinrichtungen eine effiziente Trocknung des Zweirades zu ermöglichen. Es hat sich dabei im Zusammenhang mit der vorliegenden Erfindung gezeigt, dass eine derartige Anordnung der Trocknungseinrichtung trotz der hierbei potentiell problematischen Aspekte, wie der drohenden Gefahr einer Überhitzung und der Nässe innerhalb des Spritzschutzgehäuses, möglich und sogar von Vorteil ist, insbesondere da sie eine kompakte Bauweise der Anlage ermöglicht.

Erfindungsgemäß ist die Vorrichtung derart gestaltet, dass der Luftstrom in einem Winkel höchstens 80°zur Längsrichtung eines in der Vorrichtung aufgenommenen Zweirades ausgerichtet ist.

Entsprechend kann das Verfahren zur Reinigung des Zweirades vorsehen, dass das Zweirad während eines Trocknungszyklus mittels eines innerhalb des Spritzschutzgehäuses erzeugten Luftstromes getrocknet wird. Die Vorrichtung kann insbesondere eine Steuerungseinrichtung aufweisen, die dazu eingerichtet ist, die Vorrichtung derart anzusteuern, dass die unterschiedlichen Zyklen des Verfahrens nacheinander durchgeführt werden. Die Vorrichtung kann Bedienelemente zum Bedienen der Vorrichtung aufweisen, die in einen Griff der Vorrichtung integriert sind.

Die Trocknungseinrichtung bzw. der Trocknungszyklus bewirken, dass die Restmenge an Flüssigkeit, die noch an dem Zweirad anhaftet, signifikant reduziert wird. Hierdurch wird zum einen das Risiko einer Beeinträchtigung der Umgebung der Vorrichtung durch Flüssigkeit, die noch an dem Zweirad anhaftet, reduziert, zum anderen wird das Risiko, dass Kleidung durch an dem Zweirad anhaftende Flüssigkeit verschmutzt wird, gesenkt.

Die Vorrichtung kann insbesondere eine rotierbare Bürste zur Reinigung des Zweirades aufweisen. Die rotierbare Bürste und/oder die Trocknungseinrichtung können entlang des Zweirades beweglich sein. Die Bewegung kann hierbei in horizontaler und/oder vertikaler Richtung erfolgen. Hierbei können Trocknungseinrichtung und rotierbare Bürste an einer gemeinsamen Halterung angeordnet und mit dieser gemeinsam bewegter sein. Alternativ und/oder ergänzend ist jedoch auch denkbar, dass die Trocknungseinrichtung und die rotierende Bürste voneinander unabhängig bewegt werden können. Ebenso kann eine Mehrzahl gemeinsamer Halterungen für Trocknungseinrichtung und rotierende Bürste vorhanden sein. Insbesondere können zwei Halterungen der in Rede stehenden Art vorhanden und jeweils eine Halterung auf einer Seite eines in die Vorrichtung aufgenommenen Zweirades angeordnet sein. Es versteht sich, dass die Vorrichtung eine Mehrzahl rotierender Bürsten aufweisen kann.

Insbesondere da die Vorrichtung eine Mehrzahl Trocknungseinrichtungen aufweist, kann der von sämtlichen Trocknungseinrichtungen geförderte Gesamtvolumenstrom insbesondere wenigstens 10 m3/h, insbesondere wenigstens 50 m3/h und/oder höchstens 500 m3/h betragen. Ein derartiger Gesamtvolumenstrom hat sich als geeignet für die Trocknung eines Zweirades erwiesen.

Die Trocknungseinrichtung ist eine Trocknungseinrichtung zum Trocknen des Zweirades mittels eines Luftstromes. In diesem Fall kann die Trocknungseinrichtung insbesondere eine Heizeinrichtung zum Beheizen des Luftstromes aufweisen. Durch die Beheizung wird die Fähigkeit der Luft, Flüssigkeit aufzunehmen, erhöht.

Die Trocknungseinrichtung kann ein Radialgebläse aufweisen. Das Radialgebläse kann insbesondere ein Niederdruck-Radialgebläse sein. Unter einem Radialgebläse oder auch Radiallüfter ist insbesondere ein Ventilator zu verstehen, der die Luft axial (parallel zur Drehachse des Laufrades) ansaugt und diese dann um 90° versetzt, radial wieder ausbläst. Vorrichtung ist insbesondere dazu ausgebildet, das Radialgebläse mit einer Drehzahl von wenigstens 1000, vorzugsweise wenigstens 2000, und/oder höchstens 5000 Umdrehungen pro Minute zu betreiben. Die elektrische Leistungsaufnahme eines in der Vorrichtung genutzten Radialgebläses beträgt hierbei insbesondere wenigstens 250 W, vorzugsweise wenigstens 400 W, und/oder höchstens 1000 W. Es hat sich gezeigt, dass sich bei Radiallüftern, die mit diesen Betriebsparametern betrieben werden, ein sinnvolles Verhältnis zwischen der Trocknungsleistung und der Wärmeentwicklung und damit der technischen Beherrschbarkeit innerhalb des Spritzgussgehäuses angeordneter Trocknungseinrichtungen ergibt. Alternativ und/oder ergänzend sind auch andere Arten von Niederdruck-Gebläse möglich.

Alternativ und/oder ergänzend kann die Trocknungseinrichtung einen Seitenkanalverdichter aufweisen. Der Seitenkanalverdichter kann insbesondere ein Mitteldruck-Seitenkanalverdichter sein. Alternativ und/oder ergänzend sind andere Mitteldruck-Verdichter ebenfalls möglich.

Alternativ und/oder ergänzend kann die Trocknungseinrichtung einen Kompressor aufweisen. Bei dem Kompressor kann sich insbesondere um einen Hochdruckkompressor handeln. Alternativ und/oder ergänzend sind auch andere Hochdruckerzeugungseinrichtungen möglich.

Die Trocknungseinrichtung kann, insbesondere wenn sie einen Mitteldruck-Verdichter und/oder einen Hochdruckkompressor aufweist, eine Luftklinge aufweisen. Bei einer Luftklinge (oder auch Luftmesser, Luftschwert, Luftbürste oder Luftrakel) handelt es sich um eine Vorrichtung, insbesondere mit einer Düse mit einem schlitzförmigen Querschnitt, die einen flächigen Luftstrahl erzeugt. Alternativ und/oder ergänzend können, insbesondere in Verbindung mit einem Hochdruckkompressor, auch andere Düsen eingesetzt werden. Die Vorrichtung kann dabei insbesondere derart gestaltet sein, dass die Düsen sowohl zur Erzeugung des Luftstromes der Trocknungseinrichtung als auch zum Aufbringen von Flüssigkeit auf das Zweirad genutzt werden können.

Das Spritzschutzgehäuse kann insbesondere zur lediglich teilweisen Aufnahme des Zweirades ausgebildet sein. Vorrichtungen der in Rede stehenden Art können vergleichsweise kompakt und platzsparend realisiert werden, wenn die Vorrichtung, insbesondere das Spritzgussgehäuse, dazu ausgebildet ist, das Zweirad lediglich teilweise aufzunehmen. Dies reduziert insbesondere die Bauhöhe der Vorrichtung erheblich. Insbesondere kann die Vorrichtung bzw. das Spritzgussgehäuse derart gestaltet sein, dass der Lenker und/oder der Sattel durch eine Öffnung an der Oberseite des Spritzgussgehäuses aus diesem hervortreten, wenn das Zweirad in der Vorrichtung aufgenommen ist. Auf diese Weise werden zwar Sattel und/oder Lenker von der Reinigung ausgenommen, in der Praxis zeigt sich jedoch, dass Lenker und/oder Sattel typischerweise nicht zu den stark verschmutzten Bereichen eines Zweirades gehören. Zudem ist aufgrund der dort verwendeten Materialien (Z. B. Leder) bzw. verbauter technischer Komponenten, wie Brems- und Schaltgriffeinheiten, eine intensive Nassreinigung dieser Bereiche oftmals ohnehin nicht erwünscht.

An seiner Oberseite kann das Spritzschutzgehäuse Spritzschutzelemente aufweisen. Diese können insbesondere in Gestalt von Bürsten realisiert sein, die mit ihren Borsten auf das durch die Öffnung hindurchtretende Zweirad zu bewegt werden und so an diesem zur Anlage gelangen und einen Spritzschutz bilden. In der Vergangenheit sind derartige Borsten bereits an klappbaren Elementen zum Einsatz gekommen. Es hat sich jedoch gezeigt, dass wenn derartige Borsten nach der Reinigung des Zweirades zurückgeklappt werden, diese typischerweise auf den Bediener der Vorrichtung gerichtet sind und mit ihm bzw. seiner Kleidung in Kontakt geraten und diese verschmutzen können, da an den Borsten typischerweise noch Reinigungsflüssigkeit anhaftet. Dem kann entgegengewirkt werden, wenn die Spritzschutzelemente in einer mittels eines Schienensystems geführten Bewegung auf das in dem Spritzschutzgehäuse teilweise aufgenommene Fahrrad zu über die Öffnung in der Oberseite des Spritzschutzgehäuse bewegt werden können. Bei einer derartigen Führung der Bewegung über das Schienensystems wird eine Bewegung erzeugt, bei der die Borsten immer auf das Zweirad zu und damit vom Bediener weg gerichtet sind. Das Risiko der Verschmutzung des Bedieners und/oder seiner Kleidung wird damit minimiert. Bei dem Schienensystems kann es sich insbesondere um ein Teleskopschienensystem handeln. Teleskopschienen ermöglichen einen vergleichsweise großen Bewegungsweg, lassen sich dabei jedoch auf eine vergleichsweise geringe Gesamtlänge zusammenschieben.

Die Vorrichtung kann insbesondere eine Unterstützungseinrichtung zur Unterstützung des Vorderrades eines in der Vorrichtung aufgenommenen Zweirades aufweisen. Die Unterstützungseinrichtung kann relativ zur Oberseite der Vorrichtung derart höhenverstellbar sein, dass sich durch die Höhenverstellung der Unterstützungseinrichtung die relative Position des Lenkers des Zweirades zur Oberseite der Vorrichtung in vertikaler Richtung einstellen lässt.

Insbesondere dann, wenn der Lenker bei einem nur teilweise in der Vorrichtung aufgenommenen Zweirad außerhalb des Spritzschutzgehäuse angeordnet ist, lässt sich durch eine höhenverstellbar Unterstützungseinrichtung die Reinigungswirkung dadurch optimieren, dass das Zweirad lediglich soweit aus der Vorrichtung herausragt, wie es aufgrund des Lenkers notwendig ist. Dies kann aufgrund der unterschiedlichen Gestaltung von verschiedenen Zweirädern und der daher variierenden Höhe der Zweiradlenker, insbesondere aufgrund unterschiedlicher Radgrößen, signifikant variieren. So kann insbesondere auch beispielsweise ein Rennrad aufgrund des dort typischerweise vorhandenen Bügellenkers eine spezielle Einstellung erfordern.

Die höhenverstellbare Unterstützungseinrichtung kann insbesondere durch eine oder eine Mehrzahl Gewindestangen realisiert sein. Insbesondere können Gewindestangen beidseits des in der Vorrichtung aufgenommenen Zweirades angeordnet sein. Die Gewindestangen können, beispielsweise durch ein geeignetes Zugmittel, im Hinblick auf ihre Drehbewegung miteinander gekoppelt sein. Durch ein Drehen der Gewindestangen, welches manuell oder mittels eines elektrischen Antriebes erfolgen kann, kann die mit den Gewindestangen verbundene Unterstützungseinrichtung nach obenoder unten belegbar sein.

In die Unterstützungseinrichtung kann insbesondere eine Raddreheinheit zum Drehen des Vorderrades integriert sein. Die Vorrichtung kann ebenfalls eine weitere Raddreheinheit zum Drehen des Hinterrades aufweisen. Die Raddreheinheiten zum Drehen des Hinter und/oder Vorderrades können über einen gemeinsamen Antrieb gekoppelt und/oder unabhängig voneinander antreibbar sein.

Die Vorrichtung kann derart gestaltet sein, dass der Luftstrom in einem Winkel von wenigstens 30° zur Längsrichtung eines in der Vorrichtung aufgenommenen Zweirades ausgerichtet ist. Dies betrifft insbesondere die Anordnung der Trocknungseinrichtung in der Vorrichtung.

Es hat sich gezeigt, dass eine derartige Ausrichtung des Luftstromes relativ zu dem Zweirad zu einer besonders effizienten Trocknung des Zweirades führt. Insbesondere wird der in der Vorrichtung zur Verfügung stehende Bauraum effizient ausgenutzt.

Die Trocknungseinrichtung kann insbesondere seitlich und/oder unterhalb eines in der Vorrichtung aufgenommenen Zweirades angeordnet sein.

Die Trocknungseinrichtungen sind beidseits eines in der Vorrichtung aufgenommenen Zweirades angeordnet. Es hat sich gezeigt, dass derartig angeordnete Trocknungseinrichtungen den Vorteil aufweisen, dass die Luftströme der Trocknungseinrichtungen, nachdem die Luftströme das Zweirad passiert haben, noch einen Kühlungseffekt auf gegenüberliegende Trocknungseinrichtungen ausüben können. Dies trägt erheblich zur Realisierbarkeit hinreichender Trocknungsleistungen innerhalb des Spritzschutzgehäuses bei.

Insbesondere weisen die beidseits eines in der Vorrichtung aufgenommenen Zweirades angeordneten Trocknungseinrichtungen einen Abstand von wenigstens 450 mm und/oder höchstens 650 mm zur jeweils auf der anderen Seite des Zweirades angeordneten Trocknungseinrichtung auf. Sind die Trocknungseinrichtungen an dem Zweirad entlang bewegbar, so ist unter dem vorstehenden Abstand der geringste Abstand, der sich durch die Bewegung der Trocknungseinrichtungen erzeugen lässt, zu verstehen.

Sind die Trocknungseinrichtungen an dem Zweirad entlang bewegbar, so ist die Vorrichtung insbesondere dazu ausgebildet, die Bewegung derart zu bewirken, insbesondere zu Steuern, dass sich die Trocknungseinrichtungen auf den beiden Seiten des Zweirades einander gegenüberliegen und insbesondere synchron an dem Zweirad entlang bewegt werden.

Die Trocknungseinrichtungen sind hierbei insbesondere derart ausgerichtet, dass sich die Trocknungseinrichtungen, die sich auf den beiden Seiten des Zweirades einander gegenüberliegen nicht direkt aufeinander gerichtet sind. Vorzugsweise sind die Trocknungseinrichtungen in einem Winkel kleiner als 80° zur Längsrichtung eines in der Vorrichtung aufgenommenen Zweirades derart ausgerichtet, dass der von einer Trocknungseinrichtung erzeugte Luftstrom insbesondere nicht direkt auf eine gegenüberliegende Trocknungseinrichtung, sondern insbesondere auf eine gegenüberliegende rotierbare Bürste ausgerichtet ist. Bei einer derartigen Ausrichtung profitieren die gegenüberliegenden Trocknungseinrichtungen zwar noch vom Kühleffekt des Luftstromes, ein direkter Feuchtigkeitseintrag aufgrund im Luftstrom mitgeschleppter, vom Zweirad stammender Flüssigkeit in die gegenüberliegenden Trocknungseinrichtungen wird dadurch vermieden.

Es ist insbesondere vorteilhaft, wenn die Trocknungseinrichtungen eine Schutzart von wenigstens IP 66 aufweisen. Die Verwendung von Trocknungseinrichtungen dieser Schutzklasse ist vorteilhaft, um die elektrischen Komponenten der Trocknungseinrichtung vor der Flüssigkeit im Inneren des Spritzschutzgehäuses zu schützen.

Die Trocknungseinrichtungen, bei denen es sich insbesondere um Radialgebläse handelt, können insbesondere dazu ausgebildet und derart angeordnet sein, dass die von Ihnen geförderte Luft von unten angesaugt wird. Dies hat den Vorteil, dass die Einschleppung von Flüssigkeit in die Trocknungseinrichtungen mit der angesaugten Luft geringer ist, als wenn die Luft aus anderen Richtungen angesaugt wird. Hierdurch wird insbesondere der Motor der jeweiligen Trocknungseinrichtung geschützt, da die Gefahr des Eindringens von Flüssigkeit in das Motorgehäuse entlang der Welle gesenkt wird.

Die Trocknungseinrichtungen, bei denen es sich insbesondere um Radialgebläse handelt, können insbesondere derart ausgebildet und derart angeordnet sein, dass der Motor der jeweiligen Trocknungseinrichtung oberhalb des luftfördernden Bereichs der Trocknungseinrichtung angeordnet ist. Eine derartige Anordnung ist ebenfalls vorteilhaft im Hinblick auf ein mögliches Eindringen von Feuchtigkeit aus dem berufsfördernden Bereich der Trocknungseinrichtung in den Motor der Trocknungseinrichtung.

Die Vorrichtung an derart gestaltet sein, dass Trocknungseinrichtungen auf einer niedrigeren Höhe als Austrittsdüsen für Reinigungsflüssigkeit und/oder Spülflüssigkeit angeordnet sind. Auf diese Weise lässt sich eine kompakte Anordnung innerhalb des Spritzschutzgehäuses realisieren. Gleichzeitig kann eine gründliche Reinigung und Trocknung gewährleistet werden, bei der insbesondere die Reinigungsflüssigkeit auch hochliegende Bereiche des Zweirades erreicht. Es hat sich gezeigt, dass der Betrieb elektrischer Trocknungseinrichtungen innerhalb des Spritzschutzgehäuses trotz einer Anordnung auf einer niedrigeren Höhe als entsprechender Austrittsdüsen möglich ist.

Es können Trocknungseinrichtungen übereinander angeordnet sein. Übereinander angeordnete Trocknungseinrichtungen bieten den Vorteil, eine Trocknung des Zweirades über seine gesamte Höhe zu ermöglichen.

Es kann wenigstens eine Trocknungseinrichtung, insbesondere 4 Trocknungseinrichtungen, derart angeordnet sein, dass der von dieser Trocknungseinrichtung erzeugte Luftstrom gegenüber der horizontalen in einem Winkel von wenigstens 2° und/oder höchstens 10° aufwärts gerichtet ist. Eine derartige Ausrichtung eines von einer Trocknungseinrichtung erzeugten Stroms erleichtert es, die oberen Bereiche des Zweirades effektiv zu trocknen.

Das Verfahren zum Reinigen des Zweirades kann vorsehen, dass das Zweirad während eines Spülzyklus mittels einer Spülflüssigkeit, der ein Glanztrockner und/oder eine chemische Trocknungshilfe beigemischt ist, gespült wird. Unter einem Glanztrockner und/oder einer chemische Trocknungshilfe sind insbesondere typischerweise im Kraftfahrzeugbereich verwendete Zusätze zu verstehen, die zur Unterstützung der Oberflächentrocknung dienen und als solche bezeichnet werden. Der Spülzyklus erfolgt insbesondere zwischen dem Reinigungszyklus und dem Trocknungszyklus. Ein derartiger Spülzyklus erhöht insbesondere die Effizienz, verbessert, aber auch das Ergebnis des Trocknungszyklus, insbesondere ermöglicht er eine wesentlich kürzere Dauer des Trocknungszyklus.

Weiter kann das Verfahren vorsehen, dass während eines Beladezyklus zum Einführen des Zweirades in die Vorrichtung und/oder während eines Entladezyklus zum Entfernen des Zweirades aus der Vorrichtung die Bewegung des Zweirades relativ zur Vorrichtung durch eine rotierbare Bürste und/oder eine Raddreheinheit zum Drehen der Rede des Zweirades unterstützt und/oder bewirkt wird.

Sowohl eine Raddreheinheit, wie auch eine rotierende Bürste können eine Krafteinwirkung auf das Zweirad ausüben, die dazu geeignet ist, dem Zweirad einen Vortrieb zu verleihen. Dieser Vortrieb kann zum Einführen des Zweirades und/oder zum Entfernen des Zweirades aus der Vorrichtung genutzt werden. Hierzu kann insbesondere in der Steuerungseinrichtung ein Beladezyklus und/oder ein Entladezyklus vorgesehen sein, bei dem kein Einsatz einer Flüssigkeit erfolgt. Gegebenenfalls kann der Zyklus vorsehen, dass rotierende Bürsten an einer bestimmten Position in der Vorrichtung positioniert werden, insoweit diese verfahrbar sind. In diesem Zusammenhang ist es insbesondere sinnvoll, wenn die rotierenden Bürsten in einem Beladezyklus in der unmittelbaren Nähe einer Öffnung, durch die das Zweirad in die Vorrichtung eingeführt wird, positioniert wird. Entsprechend ist vorteilhaft, wenn die rotierende Bürste im Rahmen eines Entladezyklus, bei dem das Zweirad aus der Vorrichtung entfernt wird, in unmittelbarer Nähe der Öffnung, durch die das Zweirad aus der Vorrichtung entfernt wird, positioniert wird.

Ein derartiger Beladezyklus und/oder ein derartiger Entladezyklus können auch im Rahmen von Verfahren zur Reinigung eines Zweirades mittels einer entsprechenden Vorrichtung vorgesehen sein, wenn das Verfahren keinen Trocknungszyklus und/oder die Vorrichtung keine Trocknungseinrichtung aufweist.

Zum Verschließen der Öffnung zum Einführen und/oder zum Entfernen des Zweirades kann vor der Öffnung eine Tür vorhanden sein, die mittels Scharnieren an der Vorrichtung befestigt ist. Hierbei sind die Scharniere insbesondere derart gestaltet, dass die Tür im geöffneten Zustand durch die Scharniere in einer bestimmten geöffneten Position gehalten wird. Dies ermöglicht es, mit dem Zweirad zu hantieren, ohne dass gleichzeitig die Tür der Vorrichtung festgehalten werden muss, beispielsweise um ein Zufallen der Tür zu verhindern. Bewirkt werden kann dies beispielsweise durch Scharniere, die über einen entsprechenden Reib- und/oder Rastmechanismus verfügen, der dazu führt, dass die Tür in einer bestimmten geöffneten Position verharrt.

Vorteilhaften Ausführungsform kann es sich bei der Trocknungseinrichtung um eine Luftklinge handeln, die an einer Öffnung zum Entfernen des Zweirades aus der Vorrichtung angeordnet ist. Eine derartig angeordnete Luftklinge ermöglicht es, dass das Zweirad beim Entfernen aus der Vorrichtung zwangsläufig die Luftklinge passiert. Dabei werden Reste von Flüssigkeit, die an dem Zweirad anhaften, quasi von dem Zweirad "abgestreift".

Weitere praktische Ausführungsformen und Vorteile der Erfindung sind nachfolgend im Zusammenhang mit den Zeichnungen beschrieben. Es zeigen:
Fig. 1 zeigt eine beispielhafte Vorrichtung in einer perspektivischen Ansicht,
Fig. 2 zeigt eine weitere beispielhaft Vorrichtung in einer Schnittdarstellung von oben,
Fig. 3 zeigt die Vorrichtung aus Figur 2 unter Weglassung der Bürsten,
Fig. 4 zeigt eine perspektivische Ansicht in das Innere einer beispielhaften Vorrichtung,
Fig. 5 zeigt die Vorrichtung aus Figur 4 unter Weglassung der Rampe und einiger weiterer Teile,
Fig. 6 zeigt eine beispielhafte Vorrichtung mit einer alternativen Gestaltung mit einer zusätzlichen Polierstation.

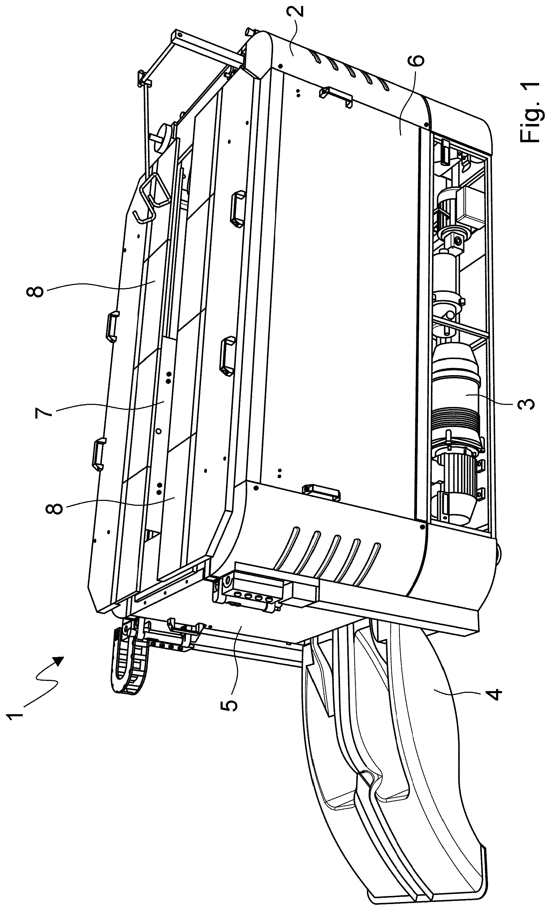

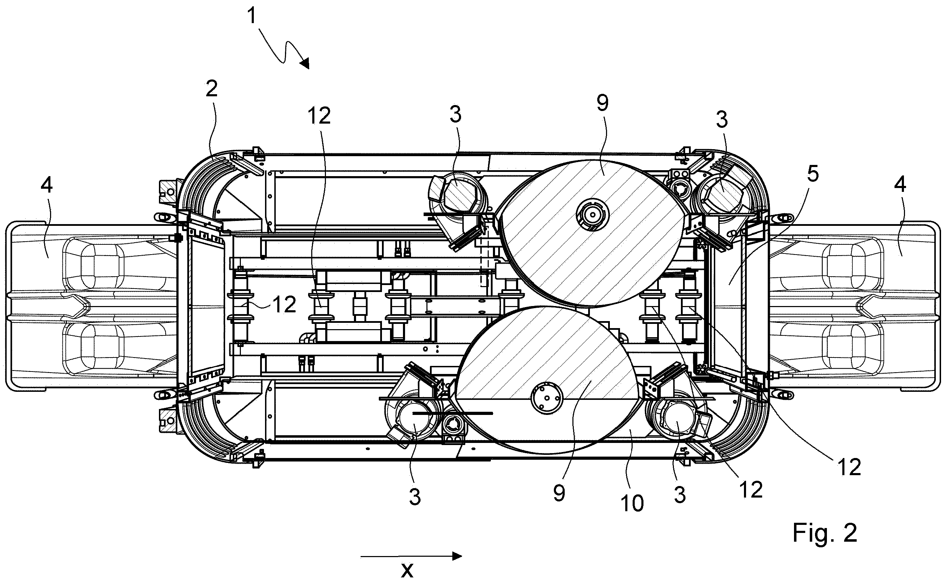

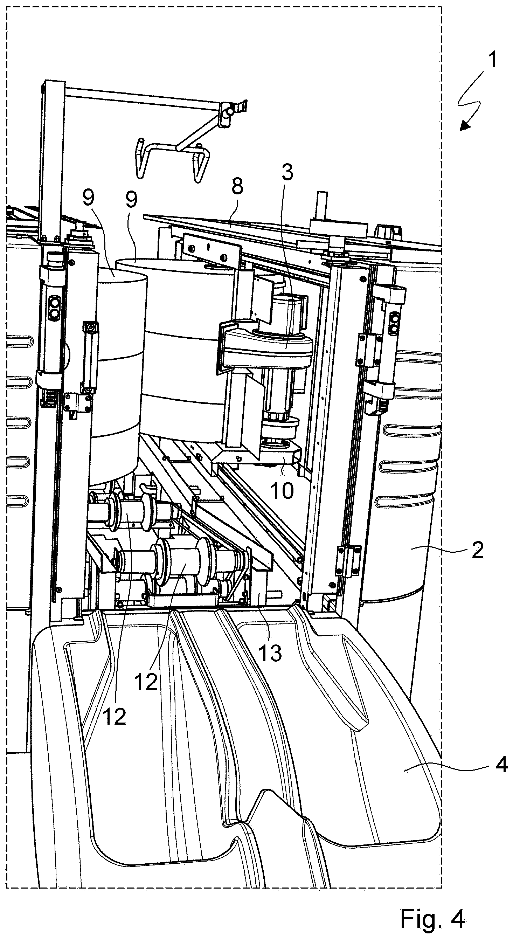

Insbesondere in Figur 1 zu erkennen ist, dass die Vorrichtung 1 ein Spritzschutzgehäuse 2 aufweist. Innerhalb des Spritzschutzgehäuses 2 ist eine Trocknungseinrichtung 3 angeordnet. Die Trocknungseinrichtung 3 ist im Fall des in Figur 1 gezeigten Beispiels als Hochdruckkompressor ausgeführt. Alternativ und/oder ergänzend kann die Trocknungseinrichtung 3 auch als Niederdruckgebläse ausgeführt sein. Dies ist insbesondere in den Figuren 2, 3, 4 und 5 zu erkennen.

Weiterhin ist in Figur 1 zu erkennen, dass die dort gezeigte Vorrichtung 1 eine Rampe 4 zum Einführen des Zweirades in die Vorrichtung und/oder zum Entfernen des Zweirades aus der Vorrichtung aufweist. Vorrichtungen 1 der in Rede stehenden Art können entsprechende Rampen 4 an beiden Enden der Vorrichtung 1 aufweisen, wie dies insbesondere in den Figuren 2, 3 und 6 zu erkennen ist.

Die Vorrichtungen 1 können Türen 5 zum Verschließen von Öffnungen zum Einbringen und/oder Entfernen der Zweiräder aufweisen. Darüber hinaus können die Vorrichtungen verschließbare Öffnungen 6 an ihren Längsseiten aufweisen. Derartige verschließbare Öffnungen 6 an den Längsseiten ermöglichen eine unterstützende manuelle Reinigung und/oder Trocknung des Zweirades in der Vorrichtung 1. Dies kann beispielsweise mittels einer Lanze mit einer entsprechenden Düse geschehen. Der hierfür notwendige Druck kann von der integrierten Trocknungseinrichtung 3 bereitgestellt werden, wie sie beispielhaft in der Figur 1 gezeigt ist. In Figur 1 ist zur Sichtbarmachung der Trocknungseinrichtung 3 ein diese verdeckendes Gehäuseteil nicht dargestellt.

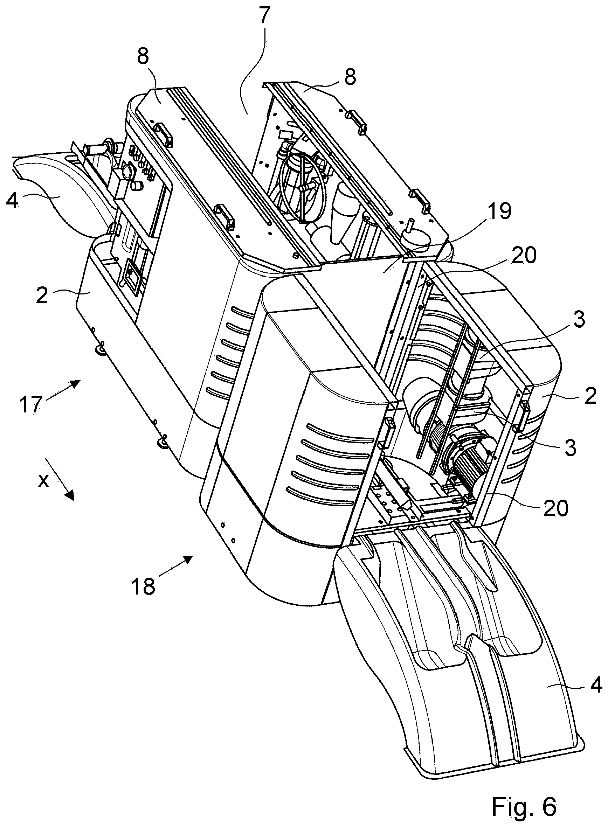

Die Vorrichtung kann, wie insbesondere in den Figuren 1 und 6 zu erkennen ist, an ihrer Oberseite eine Öffnung 7 aufweisen. Durch die Öffnung 7 Können ein Lenker und/oder ein Sattel eines in der Vorrichtung 1 aufgenommenen Zweirades aus der Vorrichtung 1 hervortreten. Die Vorrichtung 1 kann, wie dies insbesondere in den Figuren 1, 5 und 6 zu erkennen ist, Spritzschutzelemente 8 an seiner Oberseite aufweisen. Zum Verschließen der Öffnungen 7 können die in den Beispielen gezeigten Spritzschutzelemente 8 aufeinander zu bewegt werden, bis sie an den durch die Öffnung 7 hindurchtretenden Teilen eines in die Vorrichtung aufgenommenen Zweirades zur Anlage gelangen bzw. die Öffnung 7, zumindest im Wesentlichen, bedecken. Die Spritzschutzelemente 8 können Borsten zur Anlage an dem Zweirad aufweisen. Die Spritzschutzelemente 8 können mittels Teleskopschienen in ihrer Bewegung geführt sein.

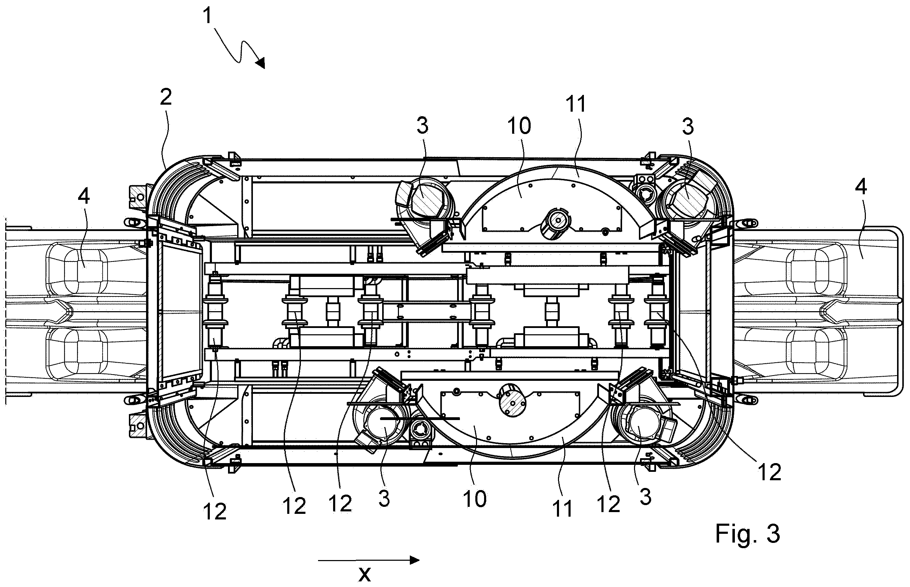

Wie insbesondere anhand der Beispiele in den Figuren 2 und 3 zu erkennen ist, können die Trocknungseinrichtungen 3 gemeinsam mit rotierbaren Bürsten 9 an Halterungen 10 aufgenommen sein. Die Halterungen 10 sind insbesondere entlang der Längsrichtung X eines in der Vorrichtung 1 aufgenommenen Zweirades beweglich. Zur besseren bildlichen Darstellung sind in der Figur 2 die Bewegungsbereiche der Bürsten 9 dargestellt. In Figur 3 sind die Bürsten nicht dargestellt, sodass die jeweilige Halterung 10 besser sichtbar ist. Ebenfalls an den Halterungen 10 angeordnet sind Abweiserelemente 11 zum Abweisen der Borsten der Bürsten 9. Die Abweiserelemente 11 haben zur Folge, dass der Bewegungsraum der Borsten der Bürste 9 nicht kreisrund, sondern, wie in Figur 2 zu erkennen, zum Spritzschutzgehäuse 2 hin abgeflacht ist. Dies ermöglicht es, die Vorrichtung 1 schmaler auszuführen.

Wie insbesondere in Figur 3 zu erkennen ist, können 8 Trocknungseinrichtungen 3, die jeweils als Radialgebläse ausgeführt sind, innerhalb des Spritzschutzgehäuses angeordnet sein. Es können, wie beispielhaft ebenfalls in Figur 3 zu erkennen, Trocknungseinrichtungen 3 übereinander angeordnet sein. Es können, wie beispielhaft ebenfalls in Figur 3 zu erkennen, die Trocknungseinrichtungen 3 derart ausgerichtet sein, dass sie auf eine bezogen auf das Zweirad gegenüberliegende rotierbare Bürste 9 ausgerichtet sind.

Die beispielhaft gezeigten Vorrichtungen weisen, wie in den Figuren 2 bis 5 zu erkennen, Raddreheinheiten 12 auf. Diese können, wie in den Figuren 2 bis 5 gezeigt, als rotierbare Walzen ausgeführt sein.

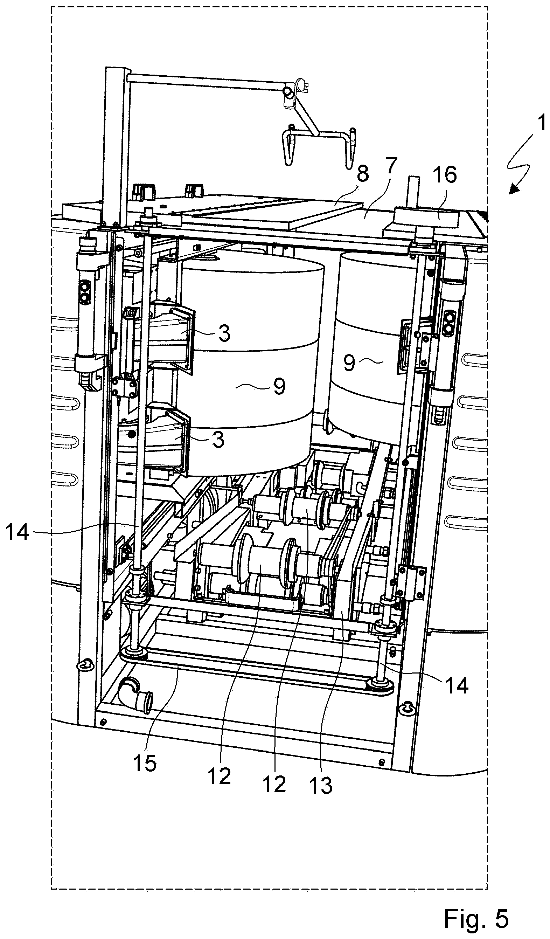

Wie insbesondere in der Figur 5 zu erkennen, kann die Vorrichtung 1 eine höhenverstellbar Unterstützungseinrichtung 13 aufweisen. Die Unterstützungseinrichtung 13 dient zur Unterstützung des Vorderrades des Zweirades. Die Unterstützungseinrichtung 13 kann insbesondere dazu dienen, die Position des Lenkers des Zweirades oberhalb der Spritzschutzelemente 8 einzustellen. Die Höhenverstellbarkeit der Unterstützungseinrichtung 13 kann durch drehbare Gewindestangen 14 realisiert sein. Diese können, wie insbesondere in Figur 5 zu erkennen ist, beidseits eines in der Vorrichtung aufgenommenen Zweirades angeordnet und durch ein Zugmittel 15 gekoppelt sein. Im gezeigten Beispiel kann mittels einer als Handrad ausgeführten Betätigungseinrichtung 16 die Höhenverstellung der Unterstützungseinrichtung 13 händisch bewirkt werden.

In Figur 6 ist eine beispielhafte Ausführungsform gezeigt, die von den in den Figuren 1 bis 5 gezeigten Ausführungsformen insbesondere durch eine Zusätzliche Polierstation 18 abweicht. Die Reinigungsstation 17 ist eine Vorrichtung 1 zum Reinigen von Zweirädern, insbesondere nach der vorstehenden Beschreibung, mit einer Nassreinigungseinrichtung zum Reinigen des Zweirades mittels einer Reinigungsflüssigkeit (in Fig. 6 nicht dargestellt) und einem Spritzschutzgehäuse 2 zum Zurückhalten der Reinigungsflüssigkeit. Ein Zweirad ist während der Reinigung zumindest zum Teil in dem Spritzschutzgehäuse 2 der Reinigungsstation 17 aufnehmbar. Die Reinigungsstation 17 eine innerhalb des Spritzschutzgehäuses angeordnete Trocknungseinrichtung (in Fig, 6 nicht dargestellt) auf.

Wie in Figur 6 dargestellt, kann sich an die Reinigungsstation 17 eine Polierstation 18 anschließen. Diese kann ebenfalls ein Spritzschutzgehäuse 2 aufweisen. Die Richtung X zeigt auch im Fall dieser Ausführungsform die Längsrichtung eines in der Reinigungsstation 17 und/oder der Polierstation 18 aufgenommenen Zweirades an. Die Reinigungsstation 17 und die Polierstation 18 können wie im gezeigten Beispiel durch ein Spritzschutzelement 19 voneinander getrennt sein.

Es können insbesondere bei einer Ausführungsform wie in der Figur 6 gezeigt in der Polierstation 18 rotierbare Polierbürsten als Trocknungseinrichtung zum Einsatz gelangen (in der beispielhaften Fig. 6 aus darstellungstechnischen Gründen nicht dargestellt). Die Polierbürsten können eine Schwamm- und/oder Textilstruktur aufweisen, um anhaftende Flüssigkeitsreste vom Zweirad zu entfernen.

Wie in Figur 6 beispielhaft gezeigt können, insbesondere als Gebläse ausgeführte, Trocknungseinrichtungen 3 in dem Spritzschutzgehäuse 2 der Polierstation 18 angeordnet sein. Die Trocknungseinrichtungen 3 in der Polierstation 18 dienen insbesondere dazu, die Polierbürsten trocken zu halten. Die Trocknungseinrichtungen 3 in der Polierstation können eine niedrigere Schutzart aufweisen als die Trocknungseinrichtungen 3 in der Reinigungsstation 17 bzw. der Vorrichtung 1 und/oder eine niedrigere Schutzart als IP 66.

Die Vorrichtung 1 kann darüber hinaus eine Luftklinge 20 aufweisen, die als Trocknungseinrichtung insbesondere im Bereich einer Öffnung zum Entfernen des Zweirades aus der Vorrichtung 1 angeordnet sein kann. Alternativ und/oder ergänzend kann eine Luftklinge 20 auch vorteilhaft im Bereich der Grenze zwischen der Reinigungsstation 17 und der Polierstation 18, wie sie in Figur 6 beispielhaft gezeigt ist, angeordnet sein.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Vorrichtung
- 2: Spritzschutzgehäuse
- 3: Trocknungseinrichtung
- 4: Rampe
- 5: Tür
- 6: verschließbare Öffnung
- 7: Öffnung
- 8: Spritzschutzelement
- 9: Bürste
- 10: Halterung
- 11: Abweiserelemente
- 12: Raddreheinheit
- 13: Unterstützungseinrichtung
- 14: Gewindestange
- 15: Zugmittel
- 16: Betätigungseinrichtung
- 17: Reinigungsstation
- 18: Polierstation
- 19: Spritzschutzelement
- 20: Luftklinge

- X: Längsrichtung des Zweirades

## Patentansprüche

1. Vorrichtung (1) zum Reinigen von Zweirädern, insbesondere Fahrrädern und/oder elektrischen Fahrrädern, mit einer Nassreinigungseinrichtung zum Reinigen des Zweirades mittels einer Reinigungsflüssigkeit und einem Spritzschutzgehäuse (2) zum Zurückhalten der Reinigungsflüssigkeit, wobei ein Zweirad während der Reinigung zumindest zum Teil in dem Spritzschutzgehäuse (2) aufnehmbar ist, wobei die Vorrichtung eine innerhalb des Spritzschutzgehäuses (2) angeordnete Mehrzahl von Trocknungseinrichtungen (3) aufweist, die beidseits eines in der Vorrichtung (1) aufgenommenen Zweirades angeordnet sind, wobei die Trocknungseinrichtungen (3) Trocknungseinrichtungen (3) zum Trocknen des Zweirades mittels Luftströmen sind,
**dadurch gekennzeichnet, dass** die Vorrichtung (1) derart gestaltet ist, dass der Luftstrom in einem Winkel von höchstens 80° zur Längsrichtung eines in der Vorrichtung (1) aufgenommenen Zweirades ausgerichtet ist.

2. Vorrichtung (1) nach Anspruch 1, **dadurch gekennzeichnet, dass** die Vorrichtung eine innerhalb des Spritzschutzgehäuses (2) angeordnete rotierbare Bürste (9) zur Reinigung des Zweirades aufweist.

3. Vorrichtung (1) nach einem der vorigen Ansprüche, **dadurch gekennzeichnet, dass** die Trocknungseinrichtung (3) ein Radialgebläse aufweist, insbesondere wobei die Vorrichtung (1) dazu ausgebildet ist, das Radialgebläse mit einer Drehzahl von wenigstens 1000, vorzugsweise wenigstens 2000, und/oder höchstens 5000 Umdrehungen pro Minute zu betreiben.

4. Vorrichtung (1) nach einem der vorigen Ansprüche, **dadurch gekennzeichnet, dass** die Vorrichtung (1), insbesondere das Spritzschutzgehäuse (2), zur lediglich teilweisen Aufnahme des Zweirades ausgebildet ist.

5. Vorrichtung (1) nach einem der vorigen Ansprüche, **dadurch gekennzeichnet, dass** die Vorrichtung (1) derart gestaltet, insbesondere die Trocknungseinrichtung (3) derart in der Vorrichtung (1) angeordnet ist, dass der Luftstrom in einem Winkel von wenigstens 30° zur Längsrichtung eines in der Vorrichtung (1) aufgenommenen Zweirades ausgerichtet ist.

6. Vorrichtung (1) nach einem der vorigen Ansprüche, **dadurch gekennzeichnet, dass** die Trocknungseinrichtung (3) unterhalb eines in der Vorrichtung (1) aufgenommenen Zweirades angeordnet ist.

7. Vorrichtung (1) nach einem der vorigen Ansprüche, **dadurch gekennzeichnet, dass** die Mehrzahl Trocknungseinrichtungen (3) in einem Abstand von wenigstens 450 mm und/oder höchstens 650 mm beidseits eines in der Vorrichtung (1) aufgenommenen Zweirades angeordnet sind.

8. Vorrichtung (1) nach einem der vorigen Ansprüche, **dadurch gekennzeichnet, dass** die Trocknungseinrichtungen (3) derart ausgebildet und derart angeordnet sind, dass der Motor der jeweiligen Trocknungseinrichtung (3) oberhalb des luftfördernden Bereichs dieser Trocknungseinrichtung (3) angeordnet ist.

9. Vorrichtung (1) nach einem der vorigen Ansprüche, **dadurch gekennzeichnet, dass** die Vorrichtung (1) derart gestaltet ist, dass die Trocknungseinrichtungen (3) auf einer niedrigeren Höhe als Austrittsdüsen für Reinigungsflüssigkeit und/oder Spülflüssigkeit angeordnet sind.

10. Vorrichtung (1) nach einem der vorigen Ansprüche, **dadurch gekennzeichnet, dass** der von sämtlichen Trocknungseinrichtungen (3) der Vorrichtung (1) geförderte Gesamtvolumenstrom wenigstens 50 m3/h, insbesondere wenigstens 100 m3/h und/oder höchstens 300 m3/h beträgt.

11. Vorrichtung (1) nach einem der vorigen Ansprüche, **dadurch gekennzeichnet, dass** Trocknungseinrichtungen (3) übereinander angeordnet sind.

12. Vorrichtung (1) nach einem der vorigen Ansprüche, **dadurch gekennzeichnet, dass** wenigstens eine Trocknungseinrichtung (3), insbesondere eine oberhalb einer anderen Trocknungseinrichtung (3) angeordnete Trocknungseinrichtung (3), derart angeordnet ist, dass der von dieser Trocknungseinrichtung (3) erzeugte Luftstrom gegenüber der Horizontalen in einem Winkel von wenigstens 2° und/oder höchstens 10° aufwärts gerichtet ist.

13. Verfahren zum Reinigen von Zweirädern, insbesondere Fahrrädern und/oder elektrischen Fahrrädern, mittels einer Vorrichtung (1) zum Reinigen von Zweirädern nach einem der vorigen Ansprüche, wobei das Zweirad während eines Reinigungszyklus mittels einer Reinigungsflüssigkeit gereinigt wird, wobei das Zweirad während der Reinigung zumindest zum Teil in einem Spritzschutzgehäuse (2) aufgenommen wird, wobei das Zweirad während eines Trocknungszyklus mittels eines innerhalb des Spritzschutzgehäuses (2) erzeugten Luftstroms getrocknet wird.

14. Verfahren nach Anspruch 13, **dadurch gekennzeichnet, dass** das Zweirad während eines Spülzyklus, der insbesondere zwischen dem Reinigungszyklus und dem Trocknungszyklus durchgeführt wird, mittels einer Spülflüssigkeit, der ein Glanztrockner und/oder eine chemische Trocknungshilfe beigemischt ist, gespült wird.

## Claims

1. Device (1) for cleaning two-wheelers, in particular bicycles and/or electric bicycles, having a wet cleaning device for cleaning the two-wheeler by means of a cleaning liquid and a spray protection housing (2) for retaining the cleaning liquid, wherein a two-wheeler can be received at least partially in the spray protection housing (2) during the cleaning,
wherein the device has a plurality of drying devices (3) which are arranged within the spray protection housing (2) and are arranged on both sides of a two-wheeler received in the device (1), wherein the drying devices (3) are drying devices (3) for drying the two-wheeler by means of air flows,
**characterized in that** the device (1) is designed in such a way that the air flow is oriented at an angle of at most 80° with respect to the longitudinal direction of a two-wheeler received in the device (1).

2. Device (1) according to claim 1, **characterized in that** the device has a rotatable brush (9), which is arranged within the spray protection housing (2), for cleaning the two-wheeler.

3. Device (1) according to one of the preceding claims, **characterized in that** the drying device (3) has a radial fan, in particular wherein the device (1) is designed to operate the radial fan at a rotational speed of at least 1000, preferably at least 2000, and/or at most 5000 revolutions per minute.

4. Device (1) according to one of the preceding claims, **characterized in that** the device (1), in particular the spray protection housing (2), is designed to receive the two-wheeler only partially.

5. Device (1) according to one of the preceding claims, **characterized in that** the device (1) is designed in such a way, in particular the drying device (3) is arranged in the device (1), in such a way that the air flow is oriented at an angle of at least 30° with respect to the longitudinal direction of a two-wheeler received in the device (1).

6. Device (1) according to one of the preceding claims, **characterized in that** the drying device (3) is arranged below a two-wheeler received in the device (1).

7. Device (1) according to one of the preceding claims, **characterized in that** the plurality of drying devices (3) are arranged at a distance of at least 450 mm and/or at most 650 mm on both sides of a two-wheeler received in the device (1).

8. Device (1) according to one of the preceding claims, **characterized in that** the drying devices (3) are designed and arranged in such a way that the motor of the respective drying device (3) is arranged above the air-conveying region of this drying device (3).

9. Device (1) according to one of the preceding claims, **characterized in that** the device (1) is designed in such a way that the drying devices (3) are arranged at a lower height than outlet nozzles for cleaning liquid and/or rinsing liquid.

10. Device (1) according to one of the preceding claims, **characterized in that** the total volume flow conveyed by all the drying devices (3) of the device (1) is at least 50 m3 /h, in particular at least 100 m3 /h and/or at most 300 m3 /h.

11. Device (1) according to one of the preceding claims, **characterized in that** drying devices (3) are arranged one above the other.

12. Device (1) according to one of the preceding claims, **characterized in that** at least one drying device (3), in particular a drying device (3) arranged above another drying device (3), is arranged in such a way that the air flow generated by this drying device (3) is directed upwards with respect to the horizontal at an angle of at least 2° and/or at most 10°.

13. Method for cleaning two-wheelers, in particular bicycles and/or electric bicycles, by means of a device (1) for cleaning two-wheelers according to one of the preceding claims, wherein the two-wheeler is cleaned by means of a cleaning liquid during a cleaning cycle, wherein the two-wheeler is at least partially received in a spray protection housing (2) during the cleaning, wherein the two-wheeler is dried by means of an air flow generated within the spray protection housing (2) during a drying cycle.

14. Method according to claim 13, **characterized in that** the two-wheeler is rinsed by means of a rinsing liquid to which a gloss dryer and/or a chemical drying aid is admixed during a rinsing cycle which is carried out in particular between the cleaning cycle and the drying cycle.

## Revendications

1. Dispositif (1) pour le nettoyage de deux-roues, en particulier de bicyclettes et/ou de bicyclettes électriques, comprenant un dispositif de nettoyage humide pour le nettoyage du deux-roues au moyen d'un liquide de nettoyage et un boîtier de protection contre les projections (2) pour retenir le liquide de nettoyage, un deux-roues pouvant être reçu pendant le nettoyage au moins en partie dans le boîtier de protection contre les projections (2),
le dispositif présentant une pluralité de dispositifs de séchage (3) disposés à l'intérieur du boîtier de protection contre les projections (2), lesquels sont disposés de part et d'autre d'un deux-roues reçu dans le dispositif (1), les dispositifs de séchage (3) étant des dispositifs de séchage (3) pour le séchage du deux-roues au moyen de courants d'air,
**caractérisé en ce que** le dispositif (1) est configuré de telle sorte que le courant d'air soit orienté selon un angle d'au plus 80° par rapport à la direction longitudinale d'un deux-roues reçu dans le dispositif (1).

2. Dispositif (1) selon la revendication 1, **caractérisé en ce que** le dispositif présente une brosse rotative (9) disposée à l'intérieur du boîtier de protection contre les projections (2) pour le nettoyage du deux-roues.

3. Dispositif (1) selon l'une quelconque des revendications précédentes, **caractérisé en ce que** le dispositif de séchage (3) présente une soufflante radiale, en particulier le dispositif (1) étant réalisé pour faire fonctionner la soufflante radiale à une vitesse de rotation d'au moins 1000, de préférence d'au moins 2000, et/ou d'au plus 5000 tours par minute.

4. Dispositif (1) selon l'une quelconque des revendications précédentes, **caractérisé en ce que** le dispositif (1), en particulier le boîtier de protection contre les projections (2), est réalisé pour la réception seulement partielle du deux-roues.

5. Dispositif (1) selon l'une quelconque des revendications précédentes, **caractérisé en ce que** le dispositif (1) est configuré de telle sorte, en particulier le dispositif de séchage (3) est disposé dans le dispositif (1) de telle sorte que le courant d'air soit orienté selon un angle d'au moins 30° par rapport à la direction longitudinale d'un deux-roues reçu dans le dispositif (1).

6. Dispositif (1) selon l'une quelconque des revendications précédentes, **caractérisé en ce que** le dispositif de séchage (3) est disposé en dessous d'un deux-roues reçu dans le dispositif (1).

7. Dispositif (1) selon l'une quelconque des revendications précédentes, **caractérisé en ce que** la pluralité de dispositifs de séchage (3) sont disposés à une distance d'au moins 450 mm et/ou d'au plus 650 mm de part et d'autre d'un deux-roues reçu dans le dispositif (1).

8. Dispositif (1) selon l'une quelconque des revendications précédentes, **caractérisé en ce que** les dispositifs de séchage (3) sont réalisés et disposés de telle sorte que le moteur du dispositif de séchage respectif (3) soit disposé au-dessus de la région de transport d'air de ce dispositif de séchage (3).

9. Dispositif (1) selon l'une quelconque des revendications précédentes, **caractérisé en ce que** le dispositif (1) est configuré de telle sorte que les dispositifs de séchage (3) soient disposés à une hauteur plus basse que des buses de sortie pour du liquide de nettoyage et/ou du liquide de rinçage.

10. Dispositif (1) selon l'une quelconque des revendications précédentes, **caractérisé en ce que** le débit volumique total transporté par tous les dispositifs de séchage (3) du dispositif (1) est d'au moins 50 m3/h, en particulier d'au moins 100 m3/h et/ou d'au plus 300 m3/h.

11. Dispositif (1) selon l'une quelconque des revendications précédentes, **caractérisé en ce que** des dispositifs de séchage (3) sont disposés les uns au-dessus des autres.

12. Dispositif (1) selon l'une quelconque des revendications précédentes, **caractérisé en ce qu'**au moins un dispositif de séchage (3), en particulier un dispositif de séchage (3) disposé au-dessus d'un autre dispositif de séchage (3), est disposé de telle sorte que le courant d'air généré par ce dispositif de séchage (3) soit orienté vers le haut par rapport à l'horizontale selon un angle d'au moins 2° et/ou d'au plus 10°.

13. Procédé pour le nettoyage de deux-roues, en particulier de bicyclettes et/ou de bicyclettes électriques, au moyen d'un dispositif (1) pour le nettoyage de deux-roues selon l'une quelconque des revendications précédentes, le deux-roues étant nettoyé pendant un cycle de nettoyage au moyen d'un liquide de nettoyage, le deux-roues étant reçu pendant le nettoyage au moins en partie dans un boîtier de protection contre les projections (2), le deux-roues étant séché pendant un cycle de séchage au moyen d'un courant d'air généré à l'intérieur du boîtier de protection contre les projections (2).

14. Procédé selon la revendication 13, **caractérisé en ce que** le deux-roues est rincé pendant un cycle de rinçage, qui est réalisé en particulier entre le cycle de nettoyage et le cycle de séchage, au moyen d'un liquide de rinçage, auquel est ajouté un séchoir brillant et/ou un auxiliaire de séchage chimique.
